# EUROPÄISCHE PATENTSCHRIFT

(11) **EP 0 992 393 B1**
(45) Veröffentlichungstag und Bekanntmachung des Hinweises auf die Patenterteilung: **13.02.2008**
(21) Anmeldenummer: 99118653.7
(22) Anmeldetag: 21.09.1999
(51) Int. Cl.: B60N 2/36

(54) **Vorrichtung zum Verriegeln von geteilt klappbaren Rückenlehnen von Rücksitzen eines Kraftfahrzeugs**
Device for locking partially tiltable backrests of rear seats of automotive vehicles
Dispositif pour verrouiller partiellement des dossiers rabattables de sièges arrières de véhicules automobiles

(30) Priorität: 09.10.1998 DE 19846633
(43) Veröffentlichungstag der Anmeldung: 12.04.2000
(73) Patentinhaber: ADAM OPEL AG, 65423 Rüsselsheim (DE)
(72) Erfinder: Pokoj, Ralf, 57368 Lennestadt (DE); Lohmann, Horst, 59846 Sundern (DE); Leuchtmann, Andrew, Dipl.-Ing., 55595 Mandel (DE)

(56) Entgegenhaltungen:
- EP-A- 0 697 307
- EP-A- 0 853 020
- EP-A- 0 854 063
- DE-C- 19 735 253
- DE-U- 9 212 370

## Beschreibung

Die Erfindung betrifft eine Vorrichtung nach dem Oberbegriff des Patentanspruches 1.

### [Stand der Technik]

Eine derartige Vorrichtung ist aus der DE 197 01 775 A1 bekannt. Bei der bekannten Vorrichtung werden geteilt klappbare Rückenlehnen von Rücksitzen eines Kraftfahrzeugs in ihrer Normalposition mit einem Rastelement bei normalem Fahrbetrieb des Kraftfahrzeugs miteinander zu einem Verbund verriegelt. Das Rastelement ist in axialer Richtung zwischen einer Entriegelungs- und Verriegelungsposition bewegbar geführt. Aus der im Normalbetrieb vorgesehenen Verriegelungsposition kann das Rastelement beispielsweise durch ein elektrisches Befehlsignal, welches eine Betätigungseinrichtung des Rastelements aktiviert, in die Entriegelungsposition verschoben werden. In seiner Verriegelungsstellung ist das Rastelement mit einem vorderen Rastende durch eine Rastausnehmung, welche dem Querschnitt des vorderen Rastendes des Rastelementes angepaßt ist, hindurchgesteckt.

### [Aufgabe der Erfindung]

Aufgabe der Erfindung ist es, eine Vorrichtung der eingangs genannten Art zu schaffen, bei welcher das Rastelement in seiner Verriegelungsposition sicher positioniert ist.

Diese Aufgabe wird erfindungsgemäß durch das Kennzeichen des Patentanspruches 1 gelöst.

Hierzu ist das Rastelement in der Weise an der einen Rückenlehne geführt, daß es am Ende seiner axialen Bewegung in die Verriegelungsstellung, nachdem sein Rastende durch die Rastausnehmung hindurchgesteckt ist, um seine Längsachse in eine die Verrieglung der beiden Rückenlehnen sichernde Stellung verdreht wird. Das Rastende besitzt hierzu einen Querschnitt, welcher bei der Axialverschiebung durch die Rastausnehmung eine der Rastausnehmung im wesentlichen angepaßte Querschnittsform aufweist, so daß ein unbehindertes Hindurchbewegen des Rastendes durch die Rastausnehmung gewährleistet wird. Nach dem Verdrehen des Rastelementes nimmt das Rastende hinter der beispielsweise von einem Beschlag geschaffenen Begrenzungsfläche, welche die Rastausnehmung umgibt, eine solche Position ein, daß es die Begrenzungsfläche überlappt. Hierdurch ist das Rastelement gegen eine nicht gewollte Zurückbewegung in die Entriegelungsposition gehindert. Ferner ist der Verbund zwischen den beiden Rückenlehnen auch in axialer Richtung des Rastelementes gesichert. Das Rastende weist hierzu eine von der Kreisform abweichende Querschnittsform auf und kann als abgeflachter Rastkopf, ähnlich wie ein Hammerkopf ausgebildet sein. In der gesicherten Verriegelungsstellung kann das Rastelement mit einer bestimmten Haltekraft, beispielsweise durch die Wirkung einer Übertotpunkt-Feder gehalten werden. In bevorzugter Weise wird das Rastelement um etwa 90° verdreht, um es in seine die Verriegelung der beiden Rückenlehnen sichernde Position zu bringen. Die Führungseinrichtung für die Bewegungsführung des Rastelementes befindet sich hierzu an der einen Rückenlehne und die Rastausnehmung, durch welche das Rastende in der Verriegelungsposition hindurchragt, an der anderen Rückenlehne.

### [Beispiele]

Anhand der Figuren wird an einem Ausführungsbeispiel die Erfindung noch näher erläutert. Es zeigt:
- Fig. 1: zwei Rückenlehnen in ihrer Normalposition, welche mit Hilfe eines Ausführungsbeispiels der Erfindung, das an den Rückseiten der Rückenlehnen vorgesehen ist, zu einem Verbund verriegelt werden können;
- Fig. 2: ein in der Fig. 1 zur Anwendung kommendes Ausführungsbeispiel der Erfindung; und
- Fig. 3: eine Einzelheit des Ausführungsbeispiels.

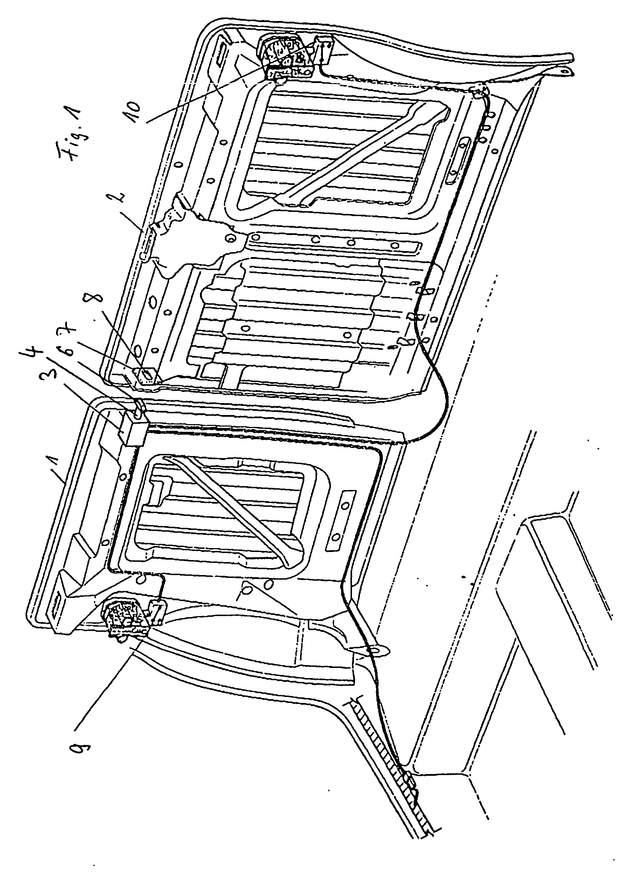

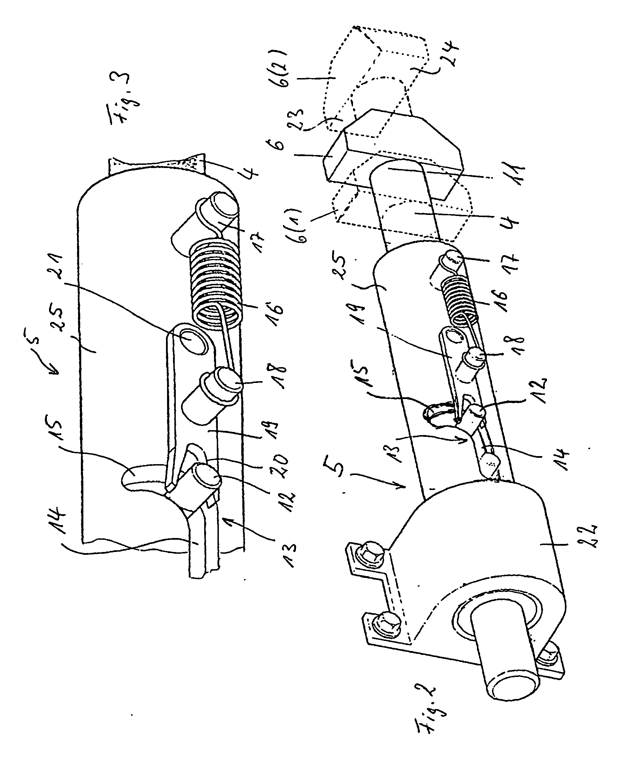

In der Fig. 1 sind die Rückseiten zweier klappbarer Rückenlehnen 1 und 2 an Rücksitzen, insbesondere einer Sitzbank eines Kraftfahrzeugs, dargestellt. An den Rückseiten der Rückenlehnen 1 und 2 befindet sich ein Ausführungsbeispiel der Vorrichtung zum Verriegeln der klappbaren Rückenlehnen 1 und 2 beim normalen Fahrbetrieb des Kraftfahrzeugs, wobei die Rückenlehnen sich in der dargestellten Normalposition, d.h. in ihrer im wesentlichen vertikalen Position im Kraftfahrzeug befinden. Durch die Verriegelungsvorrichtung werden die beiden Rückenlehnen 1 und 2 während des normalen Fahrbetriebs zu einem Verbund verriegelt. Die Verriegelungsvorrichtung besitzt hierzu eine Baueinheit 3, welcher an der einen Rükkenlehne (im Ausführungsbeispiel die Rückenlehne 1) vorgesehen ist. Die Baueinheit 3 enthält eine Führungseinrichtung 5, welche in den Fig. 2 und 3 dargestellt ist, sowie eine in der Fig. 2 gezeigte Betätigungseinrichtung 22. In der Führungseinrichtung 5 und der Betätigungseinrichtung 2 ist ein Rastelement 4 in axialer Richtung verschiebbar geführt. Am vorderen Ende besitzt das Rastelement 4 ein Rastende 6, welches beim dargestellten Ausführungsbeispiel als flach ausgebildetes Riegelelement vorliegt, das die Form eines Hammerkopfes aufweist. Durch diese Ausbildung des Rastendes 6 werden zwei radial sich ersteckende Sicherungsteile geschaffen, die sich beim dargestellten Ausführungsbeispiel in diametraler Richtung gegenüber einem sich in axialer Richtung anschließenden Rastelementeteil 11 mit vergrößerten radialen Abmessungen erstrecken. Bei der axialen Bewegung des Rastelementes 4 aus einer Entriegelungsstellung, welche in der Fig. 2 mit 6 (1) bezeichnet und strichliert dargestellt ist, in eine Verriegelungsstellung, welche in der Fig. 2 strichliert dargestellt ist und mit 6 (2) bezeichnet ist, wird das Rastende 6 durch eine Rastausnehmung bzw. Rastöffnung 8 an der anderen Rückenlehne 2 hindurchgeschoben. Die Rastausnehmung 8 ist an einem Beschlag 7 vorgesehen, dessen Beschlagsmaterial die Rastöffnung bzw. Rastausnehmung 8 umgibt, wie es in der Fig. 1 dargestellt ist. Der Öffnungsquerschnitt der Rastausnehmung 8 ist an den Querschnitt des Rastendes 6 angepaßt, so daß bei der Axialverschiebung des Rastelementes 4 das Rastende 6 durch die Rastausnehmung 8 hindurchbewegt werden kann. Hierbei nimmt das Rastelement 4 und das Rastende 6 die in der Fig. 2 mit ausgezogenen Linien dargestellte Zwischenposition ein.

Nach dem Hindurchschieben des Rastendes 6 durch die Rastausnehmung 8 wird das Rastelement 4 um seine Längsachse gedreht, so daß es die bei 6 (2) strichliert dargestellte Position einnimmt. In dieser Position kommen die beiden in radialer Richtung sich erstreckenden Sicherungsteile mit radial sich erstreckenden Anschlagflächen 23 und 24 hinter der vom Material des Beschlags 7 gebildeten Begrenzungsfläche, welche die Rastausnehmung umgibt, zu liegen. Die Anschlagflächen 23 und 24 überlappen in axialer Richtung gesehen diese Begrenzungsfläche. Anstelle von zwei radial sich erstreckenden Sicherungsteilen mit den Anschlagflächen 23 und 24 kann das Rastende 6 auch nur einen radial sich erstreckenden Sicherungsteil mit einer Anschlagfläche aufweisen. In dieser bei 6 (2) in der Fig. 2 dargestellten verdrehten Stellung des Rastendes 6 wird eine zusätzliche Sicherung gegen eine nicht beabsichtigte axiale Verschiebung des Rastelementes 4 in die Entriegelungsstellung verhindert. Hierdurch wird eine Sicherung der Verriegelungsstellung des Rastelementes 4 und damit eine Sicherung des zwischen den beiden verriegelten Rückenlehnen 1 und 2 im normalen Fahrbetrieb hergestellten Verbundes erreicht.

In den Fig. 2 und 3 ist im einzelnen eine Führungseinrichtung dargestellt, mit welcher die gewünschte Bewegungsführung des Rastelementes 4 erzielt wird. Die Führungseinrichtung 5 besitzt hierzu ein Führungsrohr 25, in welchem das Rastelement 4 in axialer Richtung verschiebbar geführt ist. In der Wandung des Führungsrohres 25 befindet sich ein Führungsschlitz 13. In den Führungsschlitz 13 ragt ein Führungsstift 12, welcher am Rastelement 4 befestigt ist. Der Führungsschlitz 13 besitzt einen sich im wesentlichen parallel zur axialen Richtung erstreckenden Schlitzteil 14. An diesem schließt sich ein weiterer Schlitzteil 15 an, der sich im wesentlichen quer zur axialen Richtung bzw. in Umfangsrichtung im Mantel des Führungsrohres 25 erstreckt. Durch den Schlitzteil 14 wird eine verdrehsichere Führung des Rastelementes 4 gewährleistet. Hierdurch wird erreicht, daß das Rastende 6 sicher in der richtigen Position durch die Rastausnehmung 8 hindurchgeführt wird. Diese Position ist mit ausgezogenen Linien als Zwischenposition in der Fig. 2 dargestellt. Nachdem das Rastende 6 durch die Rastausnehmung 8 hindurchbewegt ist, gelangt der Führungsstift 12 im Führungsschlitz 13 in den Übergangsbereich zwischen dem axialen Schlitzteil 14 und dem quer dazu bzw. in Umfangsrichtung des Führungsrohres 25 verlaufenden Schlitzteil 15. Bei der weiteren axialen Bewegung des Rastelementes 4 wird durch den Eingriff des Führungsstiftes 12 in den Schlitzbereich 15 die gewünschte Drehung des Rastelementes und damit seines Rastendes 6 in die bei 6 (2) in der Fig. 2 strichliert dargestellte endgültige Verriegelungsposition gebracht. Die aufgeprägte Drehung beträgt beim Ausführungsbeispiel etwa 90°. Der Übergangsbereich zwischen dem axial verlaufenden Schlitzteil und dem quer verlaufenden Schlitzteil 15 ist bogenförmig ausgebildet, so daß ein glatter Übergang zwischen den beiden Schlitzbereichen erreicht wird.

Beim dargestellten Ausführungsbeispiel befindet sich der Führungsstift 12 fest am Rastelement 4 und das Führungsrohr 25 ist ortsfest an der Rückenlehne 1 in der Baueinheit 3 (Fig. 1) vorgesehen. Diese beiden mechanischen Führungselemente können jedoch in kinematischer Umkehr auch so angeordnet sein, daß der Führungsstift 12 ortsfest vorgesehen ist und in einen am Rastelement 4 vorgesehenen Führungsschlitz eingreift. Die dargestellte Ausführungsform ist jedoch die bevorzugte Ausführungsform.

Das Rastelement 4 ist beim dargestellten Ausführungsbeispiel ferner in einer Betätigungseinrichtung 22 geführt. Diese Betätigungseinrichtung ermöglicht die axiale Führung und die Verdrehung des Rastelementes 4. Ferner sorgt die Betätigungseinrichtung 22 für die Antriebskraft, welche zur axialen Verschiebung des Rastelementes benötigt wird. Diese Kraft kann von Hand erzeugt werden, sie kann jedoch auch auf elektromagnetischem Wege erzeugt werden. Die Betätigungseinrichtung 22 kann hierzu in der Weise ausgebildet sein, daß sie sowohl die Axialbewegung als auch die Drehbewegung des Rastelementes 4 erzeugt. Die Betätigungseinrichtung 22 kann jedoch auch in der Weise ausgebildet sein, wie es aus der DE 197 01 775 A1 bekannt ist, wobei zusätzlich eine Führungseinrichtung zur Erzeugung der Drehbewegung in die endgültige Verriegelungsposition vorgesehen wird, wie es beispielsweise im vorstehenden anhand der Fig. 2 und 3 erläutert wurde.

Beim dargestellten Ausführungsbeispiel wird das Rastelement 4 in der verriegelten Position bei 6 (2) durch eine Haltekraft gehalten. Diese Haltekraft wird beim dargestellten Ausführungsbeispiel erzeugt durch eine Feder 16. Die Feder 16 ist als Schraubenfeder ausgebildet und mit ihrem einen Ende an einer Befestigungsstelle 17 am Führungsrohr 25 abgestützt. Das andere Federende greift an einer Angriffsstelle 18 eines Hebels 19 an. Der Hebel 19 ist als einarmiger Hebel ausgebildet, der um eine Hebelachse 21 am Führungsrohr 25 gelagert ist. An seinem freien Ende besitzt der Hebel 19 eine Eingriffstelle in Form einer Eingriffsgabel 20, welche mit dem Führungsstift 12 in Eingriff kommen kann.

Der Hebel 19 wird durch die Feder 16 in einer in den Fig. 2 und 3 dargestellten Ruheposition gehalten. Die Wirklinie der von der Feder 16 erzeugten Haltekraft in der Ruheposition befindet sich seitlich von einer Totpunktlage des federbelasteten Hebels 19. Diese Ruhelage nimmt der Hebel 16 ein, wenn das Rastelement sich in der Entriegelungsposition, in welcher das Rastende 6 die in der Fig. 2 dargestellte Position 6 (1) einnimmt, befindet. Der Führungsstift 12 befindet sich dann im axialen Schlitzteil 14 in der linken in der Fig. 2 strichliert dargestellten Endposition. Wenn bei der axialen Verschiebung des Rastelementes 4 der Führungsstift 12 in den Übergangsbereich zwischen den beiden Schlitzteilen 14 und 15 kommt, gelangt er in den Eingriffsbereich der Eingriffsgabel 20. Dieser Betriebszustand ist in den Fig. 2 und 3 dargestellt. Wenn bei der weiteren Bewegung des Rastelementes 4 dieses gedreht wird, wird der Hebel 19 entgegen der Kraft der Feder 16, mit welcher er in der Ruhelage gehalten worden ist, verschwenkt und gelangt in seine Totpunktlage und über seine Totpunktlage hinaus auf die andere Seite bis zu der Stelle, an welcher der Führungsstift 12 die Endposition im quer zur Achse verlaufenden Schlitzteil 15 erreicht. In dieser Position befindet sich das Rastende 6 in der bei 6 (2) in der Fig. 2 dargestellten Verriegelungsposition. In dieser Position wirkt die Feder wiederum mit einer bestimmten Haltekraft auf den Hebel 19 und über den Führungsstift 12 auf das Rastelement 4. Mit dieser Haltekraft wird daher das Rastende 6 in der bei 6 (2) dargestellten Verriegelungsposition gehalten.

Um zu gewährleisten, daß die Verriegelung der beiden Rückenlehnen 1 und 2 nur dann stattfindet, wenn sich die beiden Rückenlehnen in ihrer Normalposition befinden, sind Positionsmelder 9 und 10 vorgesehen. Diese zeigen durch elektrische Signale an, daß sich die beiden Rückenlehnen 1 und 2 in der in der Fig. 1 dargestellten im wesentlichen senkrechten Normalposition befinden. Wenn die entsprechenden Signale an die Betätigungseinrichtung 22 abgegeben sind, kann beispielsweise durch einen elektrischen Impuls die elektromagnetisch ausgebildete Betätigungseinrichtung 22 für die Durchführung des Verriegelungsvorgangs aktiviert werden. Wenn die Betätigungseinrichtung 22 eine von Hand betätigte Betätigungseinrichtung ist, wird durch die Signale der Positionsmelder 9 und 10 beispielsweise eine mechanische Sperre freigegeben, so daß der Verriegelungsvorgang stattfinden kann.

Zur Entriegelung und Lösen des Verbundes zwischen den beiden Rückenlehnen 1 und 2 wird die Bewegungssteuerung des Rastelementes 4 in entgegengesetzter Richtung durchgeführt. Hierzu wird zunächst das Rastelement 4 zurückgedreht, so daß das Rastende 6 mit der Rastausnehmung 8 ausgerichtet ist und beim axialen Zurückbewegen des Rastelementes 4 das Rastende 6 durch die Rastausnehmung 8 hindurch in die Entriegelungsposition bei 6 (1) der Fig. 2 zurückbewegt werden kann. Der Führungsstift 12 gleitet dann im Führungsschlitz 13 in die in der Fig. 2 dargestellte linke Endposition. Hierbei wird auch der Hebel 19 in die dargestellte Ruheposition bzw. Ausgangsposition zurückgebracht. Im Falle einer elektromagnetisch arbeitenden Betätigungseinrichtung 22 kann hierzu ein entsprechendes Befehlsignal geliefert werden.

### [Bezugszeichenliste]

- 1: Rückenlehne
- 2: Rückenlehne
- 3: Baueinheit
- 4: Rastelement
- 5: Führungseinrichtung
- 6: Rastende
- 6(1): Entriegelungsposition
- 6(2): Verriegelungsposition
- 7: Beschlag
- 8: Rastausnehmung
- 9: Positionsmelder
- 10: Positionsmelder
- 11: Rastelementeteil
- 12: Führungsstift
- 13: Führungsschlitz
- 14: axialer Schlitzteil
- 15: querverlaufender Schlitzteil
- 16: Feder
- 17: Befestigungsstelle
- 18: Angriffsstelle
- 19: Hebel
- 20: Eingriffsgabel
- 21: Hebelachse
- 22: Betätigungseinrichtung
- 23: Anschlagfläche
- 24: Anschlagfläche
- 25: Führungsrohr

## Patentansprüche

1. Vorrichtung zum Verriegeln von geteilt klappbaren Rückenlehnen von Rücksitzen eines Kraftfahrzeugs mit einem Rastelement, durch welches jeweils zwei Rückenlehnen miteinander in ihrer Normalposition zu einem Verbund bei normalem Fahrbetrieb des Kraftfahrzeuges verriegelbar sind, eine an der einen Rückenlehne vorgesehene Führungseinrichtung, durch welche das Rastelement in axialer Richtung zwischen einer Entriegelungs- und einer verriegelungsstellung bewegbar geführt ist, wobei das Rastelement in seiner Verriegelungsstellung mit einem vorderen Rastende durch eine mittels einer Begrenzung zumindest teilweise umfaßten Rastausnehmung an der anderen Rückenlehne ragt, **dadurch gekennzeichnet, daß** das Rastelement (4) am Ende der axialen Bewegung in die Verriegelungsstellung und nach dem Bewegen des Rastendes (6) durch die Rastausnehmung (8) um seine Längsachse in eine die Verriegelung der beiden Rückenlehnen (1, 2) sichernde Stellung gedreht ist.

2. Vorrichtung nach Anspruch 1, **dadurch gekennzeichnet, daß** das in die sichernde Stellung gedrehte Rastende (6) und die Begrenzung (7) der Rastausnehmung (8) in axialer Richtung gesehen, einander überlappen.

3. Vorrichtung nach Anspruch 1 oder 2, **dadurch gekennzeichnet, daß** das Rastelement (4) in seiner sichernden Stellung mit einer bestimmten Haltekraft gehalten ist.

4. Vorrichtung nach einem der Ansprüche 1 bis 3, **dadurch gekennzeichnet, daß** das Rastelement (4) etwa um 90° gedreht ist.

5. Vorrichtung nach einem der Ansprüche 1 bis 4, **dadurch gekennzeichnet, daß** das Rastende (6) einen oder zwei radial sich erstreckende Sicherungsteile aufweist, die insbesondere in diametralen Richtungen ragen und gegenüber dem sich in axialer Richtung anschließenden Rastelementeteil (11) vergrößerte radiale Abmessungen besitzen und die bei der axialen Bewegung des Rastelementes (4) durch die Rastausnehmung (8) führbar sind und in der verdrehten Stellung hinter der Begrenzung (7) der Rastausnehmung (8) liegen.

6. Vorrichtung nach einem der Ansprüche 1 bis 5, **dadurch gekennzeichnet, daß** das Rastelement (4) beim Bewegen in die Entriegelungsstellung zunächst zurückgedreht ist und dann mit seinem Rastende (6) durch die Rastausnehmung (8) in Richtung zur Entriegelungsstellung axial bewegt ist.

7. Vorrichtung nach einem der Ansprüche 1 bis 6, **dadurch gekennzeichnet, daß** das Rastelement (4) bei seiner axialen Bewegung gegen Drehen um seine Achse gesichert ist.

8. Vorrichtung nach einem der Ansprüche 1 bis 7, **dadurch gekennzeichnet, daß** die Führungseinrichtung (5) mechanische Führungsmittel aufweist, welche die verdrehsichere Axialbewegung und die Drehung des in axialer Richtung angetriebenen Rastelements (4) bewirken.

9. Vorrichtung nach einem der Ansprüche 1 bis 8, **dadurch gekennzeichnet, daß** die Führungseinrichtung (5) einen Führungsstift (12), welcher in einen Führungsschlitz (13) mit einem axial sich erstreckenden Schlitzteil (14) und einem sich quer zur axialen Richtung erstreckenden Schlitzteil (15) auf einer zylindrischen Fläche eingreift, wobei der Führungsstift (12) und der Führungsschlitz (13) bei der Bewegung des Rastelementes (4) relativ zueinander bewegt sind.

10. Vorrichtung nach Anspruch 3, **dadurch gekennzeichnet, daß** die Haltekraft, mit der das Rastelement (4) in seiner sichernden Stellung gehalten ist, Übertotpunkteigenschaft hat.

## Claims

1. Device for locking separately foldable backrests of rear seats of a motor vehicle with a catch element, by means of which two respective backrests can be locked together in their normal position to form a composite unit during normal travel operation of the motor vehicle, a guide means provided on one backrest, by means of which the catch element is movably guided in axial direction between an unlocking position and a locking position, wherein in its locking position the catch element projects with a front catch end through a catch recess on the other backrest, the recess being at least partially enclosed by a delimiting means, **characterised in that** at the end of the axial movement into the locking position and after the movement of the catch end (6) through the catch recess (8) the catch element (4) is rotated around its longitudinal axis into a position securing the locking of the two backrests (1, 2).

2. Device according to claim 1, **characterised in that** the catch end (6) rotated into the securing position and the delimiting means (7) of the catch recess (8) overlap one another viewed in axial direction.

3. Device according to claim 1 or 2, **characterised in that** the catch element (4) is held in its securing position with a defined holding force.

4. Device according to one of claims 1 to 3, **characterised in that** the catch element (4) is rotated about 90°.

5. Device according to one of claims 1 to 4, **characterised in that** the catch end (6) has one or two radially extending securing parts, which project in particular in diametric directions and have increased radial dimensions in relation to the adjoining catch element part (11) in axial direction and which can be guided through the catch recess (8) during the axial movement of the catch element (4) and in the rotated position lie behind the delimiting means (7) of the catch recess (8).

6. Device according to one of claims 1 to 5, **characterised in that** the catch element (4) during movement into the unlocking position is firstly rotated back and is then moved axially with its catch end (6) through the catch recess (8) in the direction of the unlocking position.

7. Device according to one of claims 1 to 6, **characterised in that** during its axial movement the catch element (4) is secured against rotation around its axis.

8. Device according to one of claims 1 to 7, **characterised in that** the guide means (5) has mechanical guide elements, which effect the axial movement secured against rotation and the rotation of the catch element (4) driven in axial direction.

9. Device according to one of claims 1 to 8, **characterised in that** the guide means (5) has a guide pin (12), which engages into a guide slot (13) with an axially extending slot part (14) and a slot part (15) extending transversely to the axial direction on a cylindrical surface, wherein during movement of the catch element (4) the guide pin (12) and the guide slot (13) are moved relative to one another.

10. Device according to claim 3, **characterised in that** the holding force, with which the catch element (4) is held in its securing position, has a beyond dead centre characteristic.

## Revendications

1. Dispositif pour verrouiller des dossiers rabattables séparément de sièges arrière d'un véhicule automobile avec un élément d'encliquetage, par lequel à chaque fois deux dossiers sont susceptibles d'être verrouillés l'un avec l'autre dans leur position normale pour former un ensemble lorsque le véhicule roule normalement, un dispositif de guidage prévu à l'un des dossiers, par lequel l'élément d'encliquetage est guidé dans la direction axiale de façon à être susceptible de se déplacer entre une position de déverrouillage et une position de verrouillage, l'élément d'encliquetage dépassant dans sa position de verrouillage par une extrémité avant d'encliquetage à travers un évidement d'encliquetage au moins partiellement englobé au moyen d'une délimitation sur l'autre dossier, **caractérisé en ce que** l'élément d'encliquetage (4) est tourné à la fin du mouvement axial dans la position de verrouillage et après le déplacement de l'extrémité d'encliquetage (6) à travers l'évidement d'encliquetage (8) autour de son axe longitudinal dans une position bloquant le verrouillage des deux dossiers (1,2).

2. Dispositif selon la revendication 1, **caractérisé en ce que** l'extrémité d'encliquetage (6) tournée dans la position bloquante et la délimitation (7) de l'évidement d'encliquetage (8) se chevauchent l'un l'autre, vu dans le sens axial.

3. Dispositif selon la revendication 1 ou 2, **caractérisé en ce que** l'élément d'encliquetage (4) est maintenu dans sa position bloquante avec une force de retenue définie.

4. Dispositif selon l'une quelconque des revendications 1 à 3, **caractérisé en ce que** l'élément d'encliquetage (4) est tourné d'environ 90°.

5. Dispositif selon l'une quelconque des revendications 1 à 4, **caractérisé en ce que** l'extrémité d'encliquetage (6) présente une ou deux parties de blocage s'étendant radialement, qui dépassent en particulier dans des directions diamétrales et présentent des dimensions radiales agrandies par rapport à la partie d'élément d'encliquetage (11) se raccordant dans la direction radiale et qui sont susceptibles d'être guidées lors du déplacement axial de l'élément d'encliquetage (4) à travers l'évidement d'encliquetage (8) et se situent dans la position tournée derrière la délimitation (7) de l'évidement d'encliquetage (8).

6. Dispositif selon l'une quelconque des revendications 1 à 5, **caractérisé en ce que** l'élément d'encliquetage (4) est tourné en arrière d'abord lors du déplacement dans la position de déverrouillage et est déplacé axialement ensuite avec son extrémité d'encliquetage (6) à travers l'évidement d'encliquetage (8) en direction de la position de déverrouillage.

7. Dispositif selon l'une quelconque des revendications 1 à 6, **caractérisé en ce que** l'élément d'encliquetage (4) est bloqué lors de son déplacement axial contre une rotation autour de son axe.

8. Dispositif selon l'une quelconque des revendications 1 à 7, **caractérisé en ce que** le dispositif de guidage (5) présente des moyens de guidage mécaniques qui entraînent le déplacement axial sans rotation et la rotation de l'élément d'encliquetage (4) entraîné dans le sens axial.

9. Dispositif selon l'une quelconque des revendications 1 à 8, **caractérisé en ce que** le dispositif de guidage (5) présente une broche de guidage (12) qui s'engage dans une fente de guidage (13) avec une partie fendue (14) s'étendant axialement et une partie fendue (15) s'étendant transversalement à la direction axiale sur une surface cylindrique, la broche de guidage (12) et la fente de guidage (13) étant déplacées l'une par rapport à l'autre lors du déplacement de l'élément d'encliquetage (4).

10. Dispositif selon la revendication 3, **caractérisé en ce que** la force de retenue, avec laquelle l'élément d'encliquetage (4) est maintenu dans sa position de blocage, a une propriété au-dessus du point mort.
